# EUROPEAN PATENT SPECIFICATION

(11) **EP 2 674 090 B1**
(45) Date of publication and mention of the grant of the patent: **12.07.2017**
(21) Application number: 13000950.9
(22) Date of filing: 25.02.2013
(51) Int. Cl.: A47L 11/40, A47L 9/00, G05B 13/02

(54) **Robot cleaner and associated brush control method**
Reinigungsroboter und Steuerungsverfahren der Abbürstenkraft
Robot nettoyeur et procédé de commande de la puissance de brossage et d'aspiration

(30) Priority: 13.06.2012 KR 20120063011
(43) Date of publication of application: 18.12.2013
(73) Proprietor: LG Electronics Inc., Yeongdeungpo-gu Seoul 07336 (KR)
(72) Inventor: Sung, Chulmo, 642-711 Changwon-si Gyeongnam (KR); Kang, Hyungsuk, 642-711 Changwon-si Gyeongnam (KR); Shim, Inbo, 642-711 Changwon-si Gyeongnam (KR)
(74) Representative: Ter Meer Steinmeister & Partner

(56) References cited:
- EP-A2- 0 320 878
- EP-A2- 0 479 609
- US-A1- 2004 200 017

## Description

### BACRGROUND OF THE INVENTION

### Field of the Invention

The present invention relates to a robot cleaner and a control method thereof, and more particularly, to a robot cleaner that is capable of sensing the change of a floor material to change cleaning performance and a control method thereof.

### Discussion of the Related Art

Generally, a vacuum cleaner is a device that suctions air containing foreign matter from the outside using an air suction unit provided in a cleaner body of the vacuum cleaner to generate air suction force and separates the foreign matter from the air to collect dust.

The vacuum cleaner performing the above functions may be classified as a manual vacuum cleaner that is directly manipulated by a user or a robot cleaner that performs automatic cleaning without user manipulation.

The robot cleaner is a device that travels within a region to be cleaned to suction foreign matter, such as dust, from a floor. In other words, the robot cleaner automatically performs cleaning within a predetermined region.

To this end, the robot cleaner includes a distance sensor to sense a distance from the robot cleaner to obstacles, such as furniture, office supplies, and walls, located within a region to be cleaned, and left and right wheels to move the robot cleaner. The left and right wheels are configured to be rotated by a left wheel motor and a right wheel motor, respectively. As the left wheel motor and the right wheel motor are rotated, the robot cleaner performs indoor cleaning while changing travel directions.

Also, a suction nozzle to suction foreign matter from a floor is provided at the lower part of the robot cleaner. The suction nozzle includes a nozzle case unmovably fixed to a cleaner body of the robot cleaner, a suction port formed at the bottom of the nozzle case to suction foreign matter, and an agitator rotatably provided in the suction port to sweep the foreign matter on the floor into the suction part.

Since the above conventional robot cleaner performs cleaning using uniform suction force regardless of the material for a floor on which cleaning is performed, cleaning performance on a carpet, from which it is difficult to suction foreign matter, is lowered.

D1 (EP 0 320 878 A2) relates to a vacuum cleaner comprising an electric-blower and a speed control unit to operate the electric blower at a variable speed, a plurality of kinds of operation control rules of the electric blower are previously stored into the speed control unit, a load current value of the electric blower is always detected during the cleaning and the state of the surface to be cleaned is estimated from the load current value. Thereafter, the operation control rule suitable for the estimated cleaning surface is selected from the operation control rules stored in the speed control unit and the electric blower is rotated on the basis of the selected operation control rule.

D2 (US 2004/200017 A1) relates to a power control system for a floor-maintenance tool. The power control system measures the overall power exerted by the tool motor, including the current through the tool motor and the voltage level of the power source to the tool motor. The power control system then determines the difference between the measured motor power and a selected desired operating power, and, if this difference is greater than a threshold error, automatically adjusts the force exerted upon the tool motor to either increase or decrease the tool motor power to reach the desired operating power.

D3 (EP 0 479 609 A2) relates to a vacuum cleaner, where both static pressure and a variation width in the static pressure appearing when a suction port is operated are detected from a pressure sensor provided at a rear side of a filter within a main body of the vacuum cleaner; a current variation width appearing when the suction port is operated is detected from a current of a nozzle motor for driving a rotary brush stored in a power brush suction port; an air quantity at the suction port is calculated from the current, rotational speed of a fan motor and static pressure; command values are newly obtained by performing a fuzzy calculation with the current variation width, static-pressure command value; the static pressure variation width and the air-quantity command value; the current variation width and static-pressure command value; and also the static pressure variation width and air-quantity command value as the input thereto; the rotational speeds of the fan motor and nozzle motor are controlled from the result of the command values; and further optimum air suction force is automatically obtained, depending upon the suction port under use and cleaning floor plane.

### SLMMARY OF THE INVENTION

Accordingly, the present invention is directed to a robot cleaner and a control method thereof that substantially obviate one or more problems due to limitations and disadvantages of the related art.

An object of the present invention is to provide a robot cleaner that is capable of increasing suction force when a floor material is changed, particularly when it is difficult to suction foreign matter, thereby improving cleaning performance, and a control method thereof.

Another object of the present invention is to provide a robot cleaner that is capable of sensing a floor material irrespective of the remaining power of a battery and a control method thereof.

Additional advantages, objects, and features of the invention will be set forth in part in the description which follows and in part will become apparent to those having ordinary skill in the art upon examination of the following or may be learned from practice of the invention. The objectives and other advantages of the invention may be realized and attained by the structure particularly pointed out in the written description and claims hereof as well as the appended drawings.

The objects are solved by the features of the independent claims. According to one example,
a control method of a robot cleaner includes a first step of sensing a stored value of pulse width modulation (PWM) duty ratio based on voltage of a battery mounted in the robot cleaner, a second step of comparing a measured value of PWM duty ratio with the stored value of PWM duty ratio to calculate a difference between the measured value of PWM duty ratio and the stored value of PWM duty ratio, a third step of, upon determining that the difference between the measured value of PWM duty ratio and the stored value of PWM duty ratio is equal to or greater than a first set value, calculating a distributed value of acceleration on a vertical axis of the robot cleaner, and a fourth step of, upon determining that the distributed value of acceleration deviates from a range of a second set value, increasing force to suction foreign matter. The change of a floor material based on load applied to the side brushes and the agitator is sensed to change cleaning performance based on the changed floor material.

The first step and the second step may include sensing a PWM duty ratio of an agitator or side brushes.

The fourth step may include increasing rotational speed of a motor to drive a suction fan upon determining that that the distributed value of acceleration deviates from the range of the second set value.

The fourth step may include increasing rotational speed of the agitator and rotational speed of the side brushes upon determining that that the distributed value of acceleration deviates from the range of the second set value.

The first set value may be 15 % or more.

The distributed value of acceleration may include a plurality of values measured at predetermined time intervals.

The second set value may have a range of 980 to 1020.

The distributed value of acceleration may be measured by an acceleration sensor.

According to another example, a robot cleaner includes a battery to supply power, an agitator and side brushes rotatably mounted in a lower part of a cleaner body, a motor to drive the agitator and the side brushes, a motor to provide rotational force to a suction fan to suction foreign matter, and an acceleration sensor to measure acceleration of the cleaner body in a vertical axis direction, wherein the robot cleaner further includes a controller to calculate a difference between a stored value of PWM duty ratio based on voltage of the battery and a measured value of PWM duty ratio, to calculate a distributed value of acceleration on a vertical axis of the robot cleaner upon determining that the difference between the stored value of PWM duty ratio and the measured value of PWM duty ratio is equal to or greater than a first set value, and to control force to suction foreign matter to be increased upon determining that the distributed value of acceleration deviates from a range of a second set value.

It is to be understood that both the foregoing general description and the following detailed description of the present invention are exemplary and explanatory and are intended to provide further explanation of the invention as claimed.

### BRIEF DESCRIPTION OF THE DRAWINGS

The accompanying drawings, which are included to provide a further understanding of the invention and are incorporated in and constitute a part of this application, illustrate embodiment(s) of the invention and together with the description serve to explain the principle of the invention. In the drawings:
FIG. 1 is a side sectional view schematically showing a robot cleaner according to an embodiment of the present invention;
FIG. 2 is a view showing the lower part of the robot cleaner according to the embodiment of the present invention;
FIG. 3 is a block diagram of the robot cleaner according to the embodiment of the present invention;
FIG. 4 is a control flowchart of the robot cleaner according to the embodiment of the present invention;
FIG. 5 is a view showing a pulse width modulation (PWM) duty ratio based on a battery;
FIG. 6 is a view showing the difference between PWM duty ratios in a case in which the battery of FIG. 5 has a voltage of 14.5 V; and
FIG. 7 is a view showing distributed data measured by an acceleration sensor.

### DETAILED DESCRIPTION OF THE INVENTION

Reference will now be made in detail to the preferred embodiments of the present invention, examples of which are illustrated in the accompanying drawings. Wherever possible, the same reference numbers will be used throughout the drawings to refer to the same or like parts.

In the drawings, sizes and shapes of elements may be exaggerated for convenience and clarity of description. Also, terms specially defined in consideration of the construction and operation of the present invention may vary depending upon intentions of users or operators or usual practices. The definition of such terms must be made based on the disclosure of the present invention.

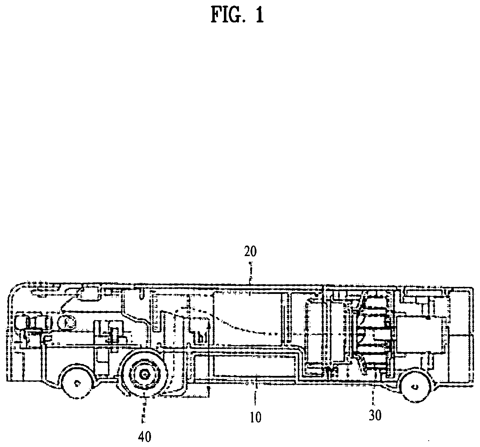

FIG. 1 is a side sectional view schematically showing a robot cleaner according to an embodiment of the present invention. Principal components of the robot cleaner will be described in brief. A battery 10, which is formed in the shape of a rectangular parallelepiped to supply power necessary to operate the robot cleaner, is provided in the robot cleaner such that the battery 10 can be charged. Since the battery 10 is heavy, the battery 10 is located at the middle of the lower part of the robot cleaner such that the robot cleaner performs a cleaning operation while smoothly moving in a balanced state.

A dust box 20 to store collected dust may be located above the battery 10. Also, a suction fan 30 to suction dust from a floor is provided. Specifically, the suction fan 30 suctions dirt or dust separated from the floor by rotation of an agitator 40 mounted at the lower part of a cleaner body of the robot cleaner. Both the suction fan 30 and the agitator 40 are driven by power supplied from the battery 10.

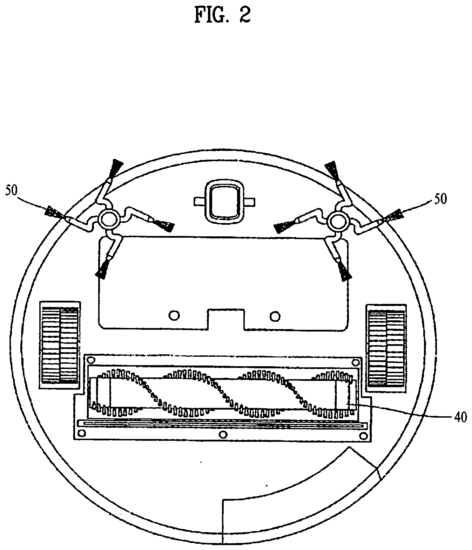

FIG. 2 is a view showing the lower part of the robot cleaner according to the embodiment of the present invention. At the lower part of the cleaner body of the robot cleaner are provided side brushes 50 to improve cleaning efficiency of a portion adjacent to a wall or the floor as well as the agitator 40. The side brushes 50 are mounted at opposite sides of the lower part of the cleaner body of the robot cleaner such that the side brushes 50 rotate about vertical rotary shafts to sweep dust on the floor into the cleaner body of the robot cleaner.

Foreign matter, such as dust, separated from the floor or the wall by the side brushes 50 is suctioned into the cleaner body by the suction fan 30.

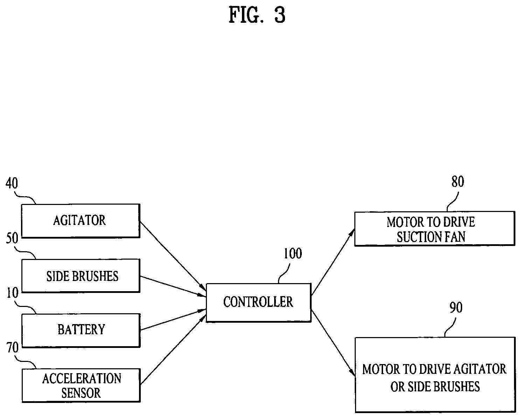

FIG. 3 is a block diagram of the robot cleaner according to the embodiment of the present invention. Hereinafter, the robot cleaner will be described with reference to FIG. 3.

The agitator 40 and the side brushes 50 are rotated to separate foreign matter from the floor or the wall. A pulse width modulation (PWM) duty ratio of the agitator 40 or the side brushes 50 is transmitted to a controller 100. Since the agitator 40 and the side brushes 50 contact the floor or the wall, frictional force between the agitator 40 and the side brushes 50 and the floor or the wall is changed as a floor material or a wall material is changed with the result that the PWM duty ratio of the agitator 40 or the side brushes 50 is also changed.

Also, voltage of the battery 19 is transmitted to the controller 100 during cleaning. As cleaning is performed, voltage of the battery 10 is gradually reduced.

Meanwhile, an acceleration sensor 70 is mounted at the cleaner body of the robot cleaner to sense acceleration of the robot cleaner on a z axis, i.e. a vertical axis. A signal regarding the change of acceleration sensed by the acceleration sensor 70 is transmitted to the controller 100. When the robot cleaner passes an uneven surface of the floor, the robot cleaner moves upward and downward. At this time, the acceleration sensor 70 may sense the change in acceleration of the robot cleaner on the vertical axis.

The controller 100 may change rotational speed of a motor 80 to drive the suction fan 30 based on the signals transmitted from the above components. As the rotational speed of the motor 80 to drive the suction fan 30 is increased, force to suction foreign matter is increased, and therefore, it is possible to more effectively suction the foreign matter.

Also, the controller 100 may change rotational speed of a motor 90 to drive the agitator 40 and the side brushes 50 based on the signals transmitted from the above components. As the rotational speed of the motor 90 to drive the agitator 40 and the side brushes 50 is increased, foreign matter may be more easily separated from the floor or the wall.

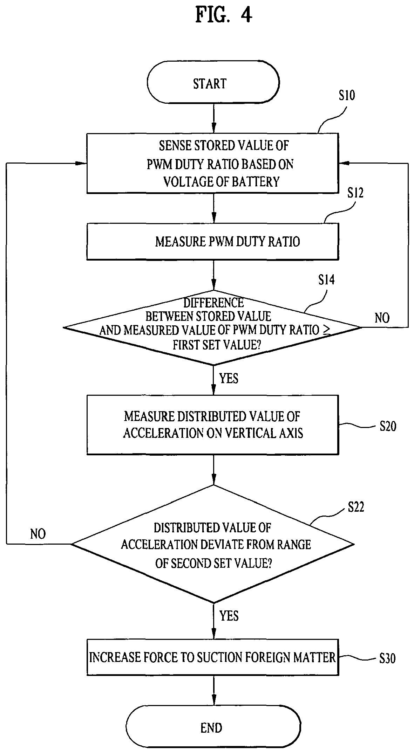

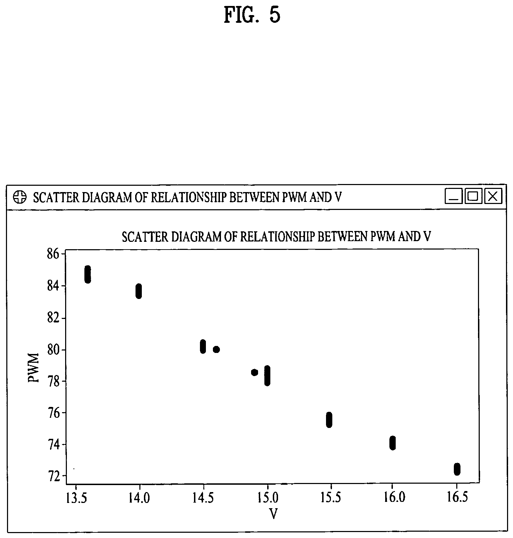

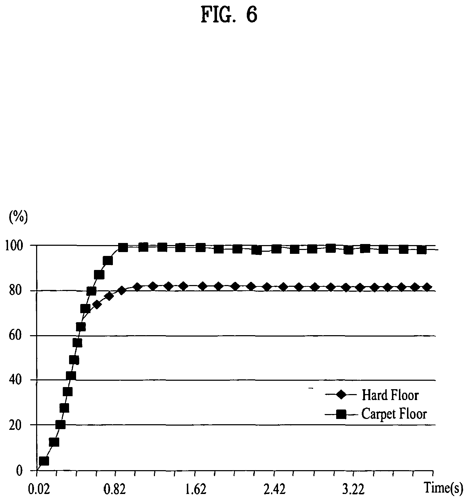

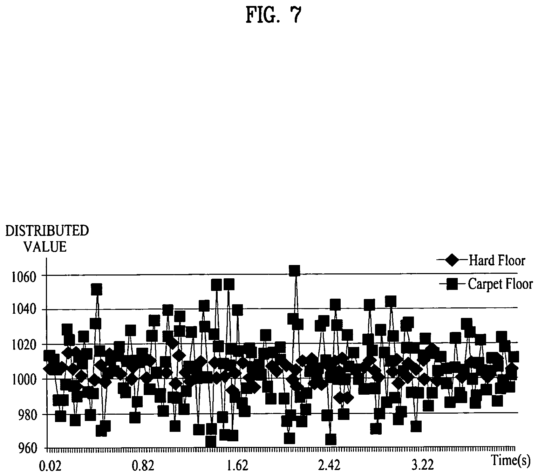

FIG. 4 is a control flowchart of the robot cleaner according to the embodiment of the present invention, FIG. 5 is a view showing a pulse width modulation (PWM) duty ratio based on a battery, FIG. 6 is a view showing the difference between PWM duty ratios in a case in which the battery of FIG. 5 has a voltage of 14.5 V, and FIG. 7 is a view showing distributed data measured by the acceleration sensor. Hereinafter, the operation of the robot cleaner will be described with reference to FIGs. 4 to 7.

First, the present voltage of the battery 10 is sensed. As cleaning is performed, voltage of the battery 10 is reduced. For this reason, it is necessary to continuously sense voltage of the battery 10 during cleaning.

A predetermined PWM duty ratio is sensed based on the sensed voltage of the battery 10 (S10). The predetermined PWM duty ratio may be set and stored by an operator during manufacture of the robot cleaner. In this case, the PWM duty ratio may be a PWM duty ratio of the agitator 40 or the side brushes 50.

As shown in FIG. 5, the PWM duty ratio is changed based on a voltage value V of the battery 10. The PWM duty ratio may be approximated by a linear equation. For example, the stored value of the PWM duty ratio may be calculated by an equation of Y (PWM) = B * (A * X (Battery Voltage)). Where, A and B indicate tuned constant values. The values A and B are set by an operator. When the present voltage value of the battery 10 is measured, therefore, it is possible to calculate a PWM duty ratio of a specific floor material.

The stored value of the PWM duty ratio is a basic value based on a floor material that enables the robot cleaner to suction foreign matter from the floor without difficulty at the normal rotational speed of the suction fan, the normal rotational speed of the agitator 40, and the normal rotational speed of the side brushes 50.

It can be seen from FIG. 5 that the PWM duty ratio is about 72 % when the voltage of the battery 10 is about 16.5 V, and the PWM duty ratio is about 80 % when the voltage of the battery 10 is about 14.5 V.

Subsequently, the controller 100 measures the present value of the PWM duty ratio (S12). In this case, the PWM duty ratio may be a PWM duty ratio of the agitator 40 or the side brushes 50. As a floor material is changed, the PWM duty ratio of the agitator 40 or the side brushes 50 rotated in contact with the floor or the wall is also changed.

The difference between the measured value of the PWM duty ratio and the stored value of the PWM duty ratio is calculated, and it is determined whether the calculated difference between the measured value of the PWM duty ratio and the stored value of the PWM duty ratio is equal to or greater than a first set value (S14).

FIG. 6 is a view showing a state in which the present voltage of the battery 10 is 14.5 V. On a hard floor, i.e. a floor on which cleaning is effectively performed using normal cleaning force, it is possible to smoothly perform cleaning even in a case in which a PWM duty ratio on a vertical axis is 80 %.

On the other hand, on a carpet floor, i.e. a floor from which it is difficult for the robot cleaner to remove foreign matter, the PWM duty ratio of the agitator 40 or the side brushes 50 may be increased to about 100 %. As a result, the difference between the measured value of the PWM duty ratio and the stored value of the PWM duty ratio may be generated.

The first set value is a value to determine the difference between the measured value of the PWM duty ratio and the stored value of the PWM duty ratio. The first set value may be set to a minimum of 15 %. When the battery 10 is fully charged to have a voltage of 16.5 V as shown in FIG. 5, the predetermined PWM duty ratio with respect to the hard floor is decreased to 72 %. When the voltage of the battery 10 is reduced to 13.5 V, however, the predetermined PWM duty ratio with respect to the hard floor may be increased to 85 %. In a case in which the stored value of the PWM duty ratio is 85 %, therefore, the difference between the measured value of the PWM duty ratio and the stored value of the PWM duty ratio is 15 % even when the measured PWM duty ratio is 100 %. For this reason, the above first set value may be the minimum value to distinguish between the hard floor and the carpet floor based on the difference between the measured value of the PWM duty ratio and the stored value of the PWM duty ratio.

If the first set value is increased, it may be possible to more accurately determine a floor material corresponding to the carpet floor. Therefore, the first set value may be 15 % or more.

If the difference between the measured value of the PWM duty ratio and the stored value of the PWM duty ratio is equal to or greater than the first set value, a distributed value of acceleration on the vertical axis is calculated using the acceleration sensor 70 (S20).

In the embodiment of the present invention, the change of a floor material is sensed using the distributed value of acceleration as well as the PWM duty ratio, and therefore, it is possible to more reliably determined the change of the floor material. The distributed value of acceleration means statistical data on changed values of acceleration measured a large number of times.

Subsequently, it is determined whether the distributed value of acceleration calculated as described above deviates from a range of a second set value (S22). The distributed value of acceleration may include a plurality of values measured at predetermined time intervals.

It is also possible to determine whether a greater part, i.e. a majority or more or 2/3 or more, of the measured values deviates from the second set value. A percentage of the numbers of the distributed value of acceleration measured as described above deviating from the second set value may be variously changed by an operator. This is because the distributed value of acceleration is a value changed based on time, and the distributed value of acceleration may be instantaneously increased or decreased by an obstacle, such as a threshold, even though the floor material is not changed.

As shown in FIG. 7, the distributed value of acceleration does not deviate from a range of 980 to 1020 in case of a hard floor, on which cleaning is performed using normal cleaning force without increasing cleaning force.

On the other hand, it can be seen that the distributed value of acceleration is decreased to 980 or less or increased to 1020 or more in case of a carpet floor, on which it is necessary to perform cleaning using increased cleaning force. In this case, the second set value may be set to a range between 980 and 1020. Of course, it is also possible to set the second set value to have a range wider than the range between 980 and 1020 for more strict determination regarding the carpet floor.

Upon determining that the distributed value of acceleration deviates from the range of the second set value, force to suction foreign matter is increased (S30). That is, the change of a floor material is sensed using the change of the PWM duty ratio and the change of the distributed value of acceleration, and, upon determining that the floor material has been changed, cleaning is performed using cleaning force higher than normal cleaning force.

At this time, the controller 100 controls the rotational speed of the motor 80 to drive the suction fan 30 to be increased such that foreign matter is suctioned using higher suction force. Foreign matter, which is not suctioned using normal suction force of the suction fan 30, may be suctioned using the increased suction force of the suction fan 30. This is because contact force between foreign matter and the floor surface of the hard floor is low, whereas contact force between foreign matter and the floor surface of the carpet floor is high. For this reason, higher suction force is necessary to separate the foreign matter from the floor surface of the carpet floor.

Also, the controller 100 may control both the rotational speed of the agitator 40 and the rotational speed of the side brushes 50 to be increased. To this end, it may be possible to increase the rotational speed of the motor 90 to drive the agitator 40 or the side brushes 50.

As the rotational speed of the agitator 40 and the rotational speed of the side brushes 50 are increased, foreign matter may be more easily separated from the floor surface, thereby improving cleaning performance.

Foreign matter is easily separated from the hard floor, whereas foreign matter is not easily separated from the carpet floor, which has great frictional force with respect to the foreign matter. For this reason, it is not possible to achieve desired cleaning performance using normal cleaning force. In the embodiment of the present invention, the agitator 40 or the side brushes 50 are rotated using higher force on the carpet floor such that foreign matter is easily separated from the floor surface of the carpet floor.

In the same manner, the controller 100 controls the motor 80 to drive the suction fan 30 to be increased such that foreign matter is suctioned using higher suction force. Consequently, it is possible to more easily suction foreign matter from the floor surface.

As is apparent from the above description, the present invention has the following effects. It is possible to sense the change of a floor material based on load applied to the side brushes and the agitator and to change cleaning performance based on the changed floor material.

Also, it is possible to sense the floor material irrespective of the remaining battery power.

It will be apparent to those skilled in the art that various modifications and variations can be made in the present invention without departing from the scope of the inventions. Thus, it is intended that the present invention covers the modifications and variations of this invention provided they come within the scope of the appended claims and their equivalents.

## Claims

1. A control method of a robot cleaner, comprising:
a first step of determining (S10) a stored value of pulse width modulation (PWM) duty ratio based on voltage of a battery (10) mounted in the robot cleaner;
a second step of comparing (S12) a measured value of PWM duty ratio with the stored value of PWM duty ratio to calculate a difference between the measured value of PWM duty ratio and the stored value of PWM duty ratio;
a third step of, upon determining (S14) that the difference between the measured value of PWM duty ratio and the stored value of PWM duty ratio is equal to or greater than a first set value, calculating (S20) a distributed value of acceleration on a vertical axis of the robot cleaner; and
a fourth step of, upon determining (S22) that the distributed value of acceleration deviates from a range of a second set value, increasing (S30) force to suction foreign matter,
wherein the distributed value of acceleration means statistical data on changed values of acceleration measured a large number of times.

2. The control method according to claim 1, wherein the first step (S10) and the second step (S12) comprise sensing a PWM duty ratio of an agitator (40) or side brushes (50).

3. The control method according to claim 2, wherein the fourth step (S22) comprises increasing rotational speed of a motor to drive a suction fan (80) upon determining that that the distributed value of acceleration deviates from the range of the second set value.

4. The control method according to claim 2, wherein the fourth step (S22) comprises increasing rotational speed of the agitator (40) and rotational speed of the side brushes (50) upon determining that that the distributed value of acceleration deviates from the range of the second set value.

5. The control method according to claim 1, wherein the first set value is 15 % or more.

6. The control method according to claim 1, wherein the distributed value of acceleration comprises a plurality of values measured at predetermined time intervals.

7. The control method according to claim 5, wherein the second set value has a range of 980 to 1020.

8. The control method according to claim 1, wherein the distributed value of acceleration is measured by an acceleration sensor (70).

9. A robot cleaner comprising: a battery (10) to supply power; an agitator (40) and side brushes (50) rotatably mounted in a lower part of a cleaner body; a motor to drive the agitator and the side brushes (90); a motor to provide rotational force to a suction fan (80) to suction foreign matter; and an acceleration sensor (70) to measure acceleration of the cleaner body in a vertical axis direction, is **characterized in that**
the robot cleaner further comprises a controller (100) to calculate a difference between a stored value (S10) of PWM duty ratio based on voltage of the battery (10) and a measured value (S12) of PWM duty ratio, to calculate (S20) a distributed value of acceleration on a vertical axis of the robot cleaner upon determining (S14) that the difference between the stored value of PWM duty ratio and the measured value of PWM duty ratio is equal to or greater than a first set value, and to control force to suction foreign matter to be increased (S30) upon determining (S22) that the distributed value of acceleration deviates from a range of a second set value, and
the distributed value of acceleration means statistical data on changed values of acceleration measured a large number of times.

10. The robot cleaner according to claim 9, wherein the controller (100) controls rotational speed of the motor to drive the suction fan (80) to be increased (S30) upon determining that the distributed value of acceleration deviates from the range of the second set value (S22).

11. The robot cleaner according to claim 9, wherein the controller (100) controls rotational speed of the agitator (40) or the side brushes (50) to be increased (S30) upon determining that the distributed value of acceleration deviates from the range of the second set value (S22).

12. The robot cleaner according to claim 9, wherein the controller controls (S12) a PWM duty ratio of the agitator (40) or the side brushes (50) to be measured.

13. The robot cleaner according to claim 9, wherein the distributed value of acceleration comprises a plurality of values measured at predetermined time intervals.

14. The robot cleaner according to claim 9, wherein the first set value is 15 % or more.

15. The robot cleaner according to claim 9, wherein the second set value has a range of 980 to 1020.

## Patentansprüche

1. Steuerverfahren eines Roboterreinigers, das Folgendes umfassen:
einen ersten Schritt des Bestimmens (S10) eines gespeicherten Wertes des Impulsbreitenmodulations-Tastgrades (PWM-Tastgrades) anhand einer Spannung einer Batterie (10), die in dem Roboterreiniger montiert ist;
einen zweiten Schritt des Vergleichens (S12) eines gemessenen Wertes des PWM-Tastgrades mit dem gespeicherten Wert des PWM-Tastgrades, um eine Differenz zwischen dem gemessenen Wert des PWM-Tastgrades und dem gespeicherten Wert des PWM-Tastgrades zu berechnen;
einen dritten Schritt des Berechnens (S20) einer Beschleunigungswertverteilung auf einer vertikalen Achse des Roboterreinigers, wenn bestimmt wird (S 14), dass die Differenz zwischen dem gemessenen Wert des PWM-Tastgrades und dem gespeicherten Wert des PWM-Tastgrades gleich oder größer als ein erster eingestellter Wert ist; und
einen vierten Schritt des Erhöhens (S30) einer Kraft zum Ansaugen von Fremdstoffen, wenn bestimmt wird (S22), dass die Beschleunigungswertverteilung von einem Bereich eines zweiten eingestellten Wertes abweicht,
wobei die Beschleunigungswertverteilung die Bedeutung von statistischen Daten über geänderte Werte der Beschleunigung, die in einer großen Anzahl gemessen werden, hat.

2. Steuerverfahren nach Anspruch 1, wobei der erste Schritt (S10) und der zweite Schritt (S12) das Erfassen eines PWM-Tastgrades einer Drehbürste (40) oder von Seitenbürsten (50) umfassen.

3. Steuerverfahren nach Anspruch 2, wobei der vierte Schritt (S22) das Erhöhen der Drehzahl eines Motors für den Antrieb eines Saugebläses (80) umfasst, wenn bestimmt wird, dass die Beschleunigungswertverteilung von den Bereich des zweiten eingestellten Wertes abweicht.

4. Steuerverfahren Anspruch 2, wobei der vierte Schritt (S22) das Erhöhen der Drehzahl der Drehbürste (40) und der Drehzahl der Seitenbürsten (50) umfasst, wenn bestimmt wird, dass die Beschleunigungswertverteilung von dem Bereich des zweiten eingestellten Wertes abweicht.

5. Steuerverfahren Anspruch 1, wobei der erste eingestellte Wert auf 15 % oder mehr eingestellt ist.

6. Steuerverfahren nach Anspruch 1, wobei die Beschleunigungswertverteilung mehrere Werte umfasst, die in vorgegebenen Zeitintervallen gemessen werden.

7. Steuerverfahren nach Anspruch 5, wobei der zweite eingestellte Wert einen Bereich von 980 bis 1020 hat.

8. Steuerverfahren nach Anspruch 1, wobei die Beschleunigungswertverteilung durch einen Beschleunigungssensor (70) gemessen wird.

9. Roboterreiniger, der Folgendes umfasst: eine Batterie (10) für die Versorgung mit Leistung; eine Drehbürste (40) und Seitenbürsten (50), die in einem unteren Teil eines Reinigerkörpers drehbar montiert sind; einen Motor (90) zum Antreiben der Drehbürste und der Seitenbürsten; einen Motor, um eine Drehkraft für ein Sauggebläse (80) zum Ansaugen von Fremdstoffen bereitzustellen; und einen Beschleunigungssensor (70), um die Beschleunigung des Reinigerkörpers in Richtung einer vertikalen Achse zu messen, **dadurch gekennzeichnet, dass**:
der Roboterreiniger ferner einen Steuereinheit (100) umfasst, um eine Differenz zwischen einem gespeicherten Wert (S10) des PWM-Tastgrades anhand einer Spannung der Batterie (10) und einem gemessenen Wert (S12) des PWM-Tastgrades zu berechnen, eine Beschleunigungswertverteilung auf einer vertikalen Achse des Roboterreinigers zu berechnen (S20), wenn bestimmt wird (S 14), dass die Differenz zwischen dem gespeicherten Wert des PWM-Tastgrades und dem gemessenen Wert des PWM-Tastgrades gleich oder größer als ein erster eingestellter Wert ist, und die Kraft zum Ansaugen von Fremdstoffen zu steuern, um sie zu erhöhen (S30), wenn bestimmt wird (S22), dass die Beschleunigungswertverteilung von einem Bereich eines zweiten eingestellten Wertes abweicht, und
die Beschleunigungswertverteilung die Bedeutung von statistischen Daten über geänderte Werte der Beschleunigung, die in einer großen Anzahl gemessen werden, hat.

10. Roboterreiniger nach Anspruch 9, wobei die Steuereinheit (100) die Drehzahl des Motors zum Antreiben des Sauggebläses (80) steuert, um sie zu erhöhen (S30), wenn bestimmt wird, dass die Beschleunigungswertverteilung von dem Bereich des zweiten eingestellten Wertes abweicht (S22).

11. Roboterreiniger nach Anspruch 9, wobei die Steuereinheit (100) die Drehzahl der Drehbürste (40) oder der Seitenbürsten (50) steuert, um sie zu erhöhen (S30), wenn bestimmt wird, dass die Beschleunigungswertverteilung von dem Bereich des zweiten eingestellten Wertes (S22) abweicht.

12. Roboterreiniger nach Anspruch 9, wobei die Steuereinheit einen PWM-Tastgrad der Drehbürste (40) oder der Seitenbürsten (50), der gemessen werden soll, steuert (S12).

13. Roboterreiniger nach Anspruch 9, wobei die Beschleunigungswertverteilung mehrere Werte umfasst, die in vorgegebenen Zeitintervallen gemessen werden.

14. Roboterreiniger nach Anspruch 9, wobei der erste eingestellte Wert 15 % oder mehr beträgt.

15. Roboterreiniger nach Anspruch 9, wobei der zweite eingestellte Wert einen Bereich von 980 bis 1020 hat.

## Revendications

1. Procédé de commande d'un robot nettoyeur, comprenant :
une première étape de détermination (S10) d'une valeur mémorisée d'un rapport de service à modulation par largeur d'impulsion (PWM) sur la base d'une tension d'une batterie (10) montée dans le robot nettoyeur ;
une seconde étape de comparaison (S12) d'une valeur mesurée du rapport de service PWM avec la valeur mémorisée du rapport de service PWN afin de calculer une différence entre la valeur mesurée de rapport de service PWM et la valeur mémorisée du rapport de service PWM ;
une troisième étape, lors de la détermination (S14) que la différence entre la valeur mesurée du rapport de service PWM et la valeur mémorisée du rapport de service PWM est égale ou supérieure à une première valeur réglée, de calcul (S20) d'une valeur distribuée d'accélération sur un axe vertical du robot nettoyeur ; et
une quatrième étape d'augmentation (S30), lors de la détermination (S22) que la valeur distribuée d'accélération dévie d'une plage d'une seconde valeur réglée, d'une force d'aspiration des matières étrangères,
dans lequel la valeur distribuée d'accélération signifie des données statistiques relatives aux valeurs modifiées d'accélération mesurées un plus grand nombre de fois.

2. Procédé de commande selon la revendication 1, dans lequel la première étape (S10) et la seconde étape (S12) comprend de détecter un rapport de service PWM d'un agitateur (40) ou de brosses latérales (50).

3. Procédé de commande selon la revendication 2, dans lequel la quatrième étape (S22) comprend d'augmenter la vitesse de rotation d'un moteur pour entraîner un ventilateur d'aspiration (80) lors de la détermination que la valeur distribuée d'accélération dévie de la plage de la seconde valeur réglée.

4. Procédé de commande selon la revendication 2, dans lequel la quatrième étape (S22) comprend d'augmenter la vitesse de rotation de l'agitateur (40) et la vitesse de rotation des brosses latérales (50) lors de la détermination que la valeur distribuée d'accélération dévie de la plage de la seconde valeur réglée.

5. Procédé de commande selon la revendication 1, dans lequel la première valeur réglée est 15% ou plus.

6. Procédé de commande selon la revendication 1, dans lequel la valeur d'accélération distribuée comprend une pluralité de valeurs mesurées à des intervalles de temps prédéterminés.

7. Procédé de commande selon la revendication 5, dans lequel la seconde valeur réglée a une plage de 980 à 1020.

8. Procédé de commande selon la revendication 1, dans lequel la valeur distribuée d'accélération est mesurée par un capteur d'accélération (70).

9. Robot nettoyeur comprenant une batterie (10) pour l'alimentation électrique ; un agitateur (40) et des brosses latérales (50) montées rotativement dans une partie inférieure d'un corps de robot ; un moteur pour entraîner l'agitateur et les brosses latérales (90) ; un moteur pour fournir une force rotative à un ventilateur d'aspiration (80) pour aspirer les matières étrangères ; et un capteur d'accélération (70) pour mesurer une accélération du corps de robot dans une direction d'axe vertical, est **caractérisé en ce que**
le robot nettoyeur comprend en outre un contrôleur (100) afin de calculer une différence entre une valeur mémorisée (S10) du rapport de service PWM sur la base de la tension de la batterie (10) et une valeur mesurée (S12) du rapport de service PWM, calculer (S20) une valeur distribuée d'accélération sur un axe vertical du robot nettoyeur lors de la détermination (S14) que la différence entre la valeur mesurée du rapport de service PWM et la valeur mémorisée du rapport de service PWM est égale ou supérieure à une première valeur réglée, et commander une force pour aspirer les matières étrangères à être augmentée (S30) lors de la détermination (S22) que la valeur distribuée d'accélération dévie d'une plage d'une seconde valeur réglée, et
la valeur distribuée d'accélération signifie des données statistiques relatives aux valeurs modifiées d'accélération mesurées un plus grand nombre de fois.

10. Robot nettoyeur selon la revendication 9, dans lequel le contrôleur (100) commande la vitesse de rotation du moteur afin d'entraîner le ventilateur d'aspiration (80) à être augmentée (S30) lors de la détermination que la valeur distribuée d'accélération dévie de la plage de la seconde valeur réglée (S22).

11. Robot nettoyeur selon la revendication 9, dans lequel le contrôleur (100) commande la vitesse de rotation de l'agitateur (40) ou des brosses latérales (50) à être augmentée (S30) lors de la détermination que la valeur distribuée d'accélération dévie de la plage de la seconde valeur réglée (S22).

12. Robot nettoyeur selon la revendication 9, dans lequel le contrôleur commande (S12) un rapport de service PWM de l'agitateur (40) ou des brosses latérales (50) à être mesurées.

13. Robot nettoyeur selon la revendication 9, dans lequel la valeur distribuée d'accélération comprend une valeurs mesurées à des intervalles de temps prédéterminés.

14. Robot nettoyeur selon la revendication 9, dans lequel la première valeur réglée est 15% ou plus.

15. Robot nettoyeur selon la revendication 9, dans lequel la seconde valeur réglée a une plage de 980 à 1020.
